# EUROPÄISCHE PATENTANMELDUNG

(11) **EP 1 544 057 A1**
(43) Veröffentlichungstag der Anmeldung: **22.06.2005**
(21) Anmeldenummer: 04029546.1
(22) Anmeldetag: 14.12.2004
(51) Int. Cl.: B60R 21/16

(54) **Verfahren zum Zusammenlegen eines Gassacks, Vorrichtung zum Zusammenlegen eines Gassacks, sowie zusammengelegter Gassack**

(30) Priorität: 15.12.2003 DE 10358564; 09.06.2004 DE 102004028048
(71) Anmelder: TRW Automotive Safety Systems GmbH, 63743 Aschaffenburg (DE)
(72) Erfinder: Krygier, Robert, 42-200 Czestochowa (PL)
(74) Vertreter: Sties, Jochen, Dipl.-Ing.

(57) **Zusammenfassung**

Die Erfindung betrifft ein Verfahren zum Zusammenlegen eines Gassacks (30) mittels der folgenden Schritte: Zunächst wird der Gassack (30) auf einer Unterlage (10) flach ausgebreitet. Dann wird ein ringförmiger Außenbereich (34) des Gassacks (30), der einen Mittelbereich (32) umgibt, um etwa 90° umgelegt, so daß der Außenbereich den Mittelbereich schürzenförmig umgibt. Anschließend wird der Außenbereich (34) zur Unterlage (10) hin zusammengeschoben. Die Erfindung betrifft auch eine Vorrichtung zum Zusammenlegen eines Gassacks sowie einen zusammengelegten Gassack.

## Beschreibung

Die Erfindung betrifft ein Verfahren zum Zusammenlegen eines Gassacks. Die Erfindung betrifft außerdem eine Vorrichtung zum Zusammenlegen eines Gassacks. Die Erfindung betrifft schließlich einen zusammengelegten Gassack.

Ein solcher Gassack ist Teil eines Fahrzeuginsassen-Rückhaltesystems, mit dem ein Fahrzeuginsasse vor Verletzungen geschützt werden soll. Im Bedarfsfall muß der Gassack möglichst schnell aus einem platzsparend zusammengelegten Zustand in einen entfalteten Zustand überführt werden. Hierbei spielt unter anderem die Art und Weise eine Rolle, wie der Gassack zusammengelegt wurde, da sowohl die Entfaltungsgeschwindigkeit als auch die Entfaltungsrichtung eines Gassacks dadurch beeinflußt werden können, wie die Wandung zusammengelegt wurde.

Im Stand der Technik ist eine Vielzahl von Verfahren bekannt, um einen Gassack platzsparend zusammenzulegen. Die meisten Verfahren bestehen aus einer Vielzahl von einzelnen, präzise definierten Faltschritten. Außerdem sind Verfahren bekannt, bei denen der Gassack im wesentlichen zusammengeschoben wird, so daß kein präzise gefalteter Gassack, sondern ein zusammengelegter Gassack mit mindestens abschnittsweise chaotisch verlaufender Wandung erhalten wird.

Die Aufgabe der Erfindung besteht darin, ein Verfahren zum Zusammenlegen eines Gassacks zu schaffen, das sich durch einen geringen Aufwand auszeichnet. Die Aufgabe der Erfindung besteht außerdem darin, eine Vorrichtung zum Zusammenlegen des Gassacks zu schaffen. Die Aufgabe der Erfindung besteht schließlich darin, einen mit einfachen Mitteln zusammengelegten Gassack zu schaffen.

Zur Lösung dieser Aufgabe ist erfindungsgemäß ein Verfahren zum Zusammenlegen eines Gassacks vorgesehen, welches die folgenden Schritte enthält: Zunächst wird der Gassack flach auf einer Unterlage ausgebreitet. Dann wird ein ringförmiger Außenbereich des Gassacks, der einen Mittelbereich umgibt, um etwa 90° umgelegt, so daß der Außenbereich den Mittelbereich schürzenförmig umgibt. Schließlich wird der Außenbereich zur Unterlage hin zusammengeschoben. Auf diese Weise läßt sich mit geringem Aufwand ein platzsparend zusammengelegter Gassack erhalten. Besonders vorteilhaft ist dabei, daß die Wandung sich größtenteils in einem Ring befindet, der den Mittelbereich des Gassacks umgibt. Dieses Verfahren ist insbesondere für sogenannte Doughnut-Gassäcke geeignet, also für Gassäcke, die im wesentlichen aus einem schlauchförmigen Wulst bestehen.

Zur Lösung der obengenannten Aufgabe ist auch eine Vorrichtung zum Zusammenlegen eines Gassacks vorgesehen, die dadurch gekennzeichnet ist, daß sie eine Unterlage aufweist, die einen feststehenden Mittelabschnitt und ein bewegbares Umlegeelement aufweist, sowie einen ringförmigen Außenstempel, dessen Außendurchmesser etwa dem Außendurchmesser des Mittelabschnitts entspricht und der aus einer Ausgangsstellung in eine gegen die Unterlage gedrückte Zusammenlegstellung verstellt werden kann. Diese Vorrichtung zeichnet sich dadurch aus, daß der Gassack mit sehr geringem Aufwand in eine topfförmige Gestalt gebracht werden kann, aus der heraus er mit geringem Aufwand zusammengeschoben werden kann.

Die oben genannte Aufgabe wird schließlich gelöst durch einen zusammengelegten Gassack, der dadurch gekennzeichnet ist, daß er einen flach ausgebreiteten Mittelbereich aufweist und einen diesen umgebenden Ringbereich, in welchem die Wandung des Gassacks chaotisch zusammengeschoben ist.

Vorteilhafte Ausgestaltungen der Erfindung ergeben sich aus den Unteransprüchen.

Die Erfindung wird nachfolgenden anhand von bevorzugten Ausführungsformen beschrieben, die in den beigefügten Zeichnungen dargestellt sind. In diesen zeigen:
- Figur leinen schematischen Schnitt durch eine Vorrichtung gemäß einer ersten Ausführungsform der Erfindung zum Zusammenlegen eines Gassacks in einem Zustand vor Beginn des Verfahrens;
- Figur 2schematisch eine Draufsicht entlang den Pfeilen II von Fig. 1;
- Figur 3eine Ansicht entsprechend derjenigen von Fig. 1, wobei sich die Vorrichtung in einem Zwischenschritt des Verfahrens befindet;
- Figur 4eine Ansicht entsprechend derjenigen von Fig. 3, wobei sich die Vorrichtung in einem Zustand nach Beendigung des Verfahrens befindet;
- Figur 5einen schematischen Schnitt durch eine Vorrichtung gemäß einer zweiten Ausführungsform der Erfindung zum Zusammenlegen eines Gassacks in einem Zustand zu Beginn des Verfahrens;
- Figur 6einen schematischen Schnitt durch die Vorrichtung von Figur 5, nachdem ein erster Verfahrensschritt ausgeführt wurde;
- Figur 7einen schematischen Schnitt durch die Vorrichtung von Figur 5, nachdem ein zweiter Verfahrensschritt ausgeführt wurde;
- Figur 8einen schematischen Schnitt durch die Vorrichtung von Figur 5, nachdem der Gassack fertig zusammengelegt wurde; und
- Figur 9einen Schnitt entlang der Ebene IX-IX von Figur 8.

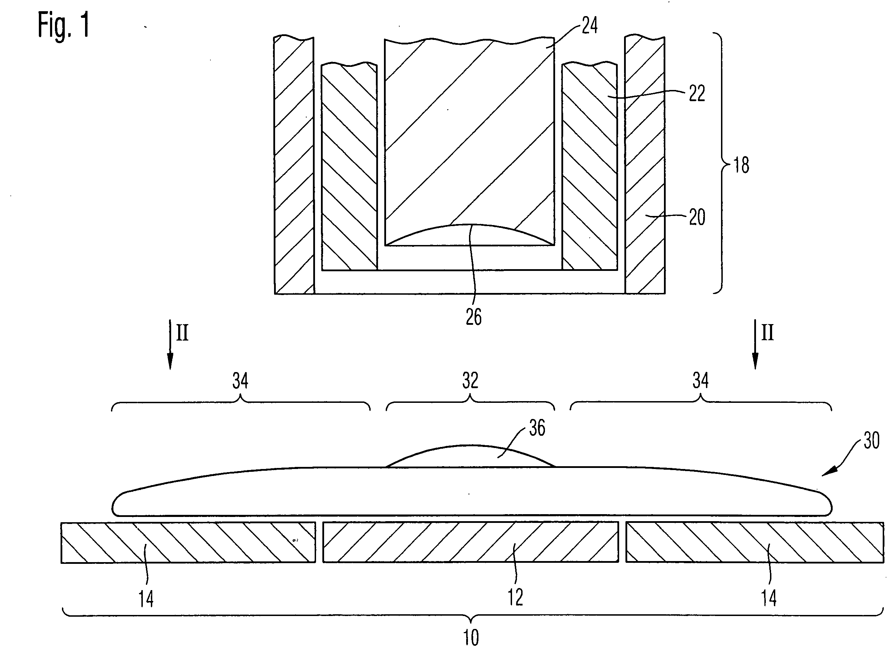

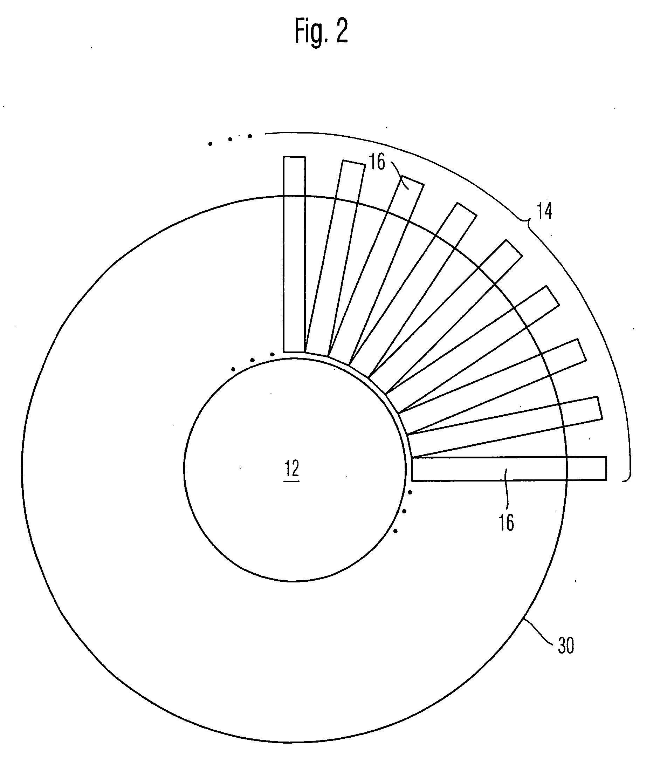

In den Figuren 1 und 2 ist eine erste Ausführungsform einer Vorrichtung zum Zusammenlegen eines Gassacks gezeigt. Die Vorrichtung weist eine Unterlage 10 auf, die aus einem feststehenden Mittelabschnitt 12 und einem klappbaren Außenabschnitt 14 besteht, der ein Umlegeelement bildet. Der klappbare Außenabschnitt erstreckt sich ringförmig um den Mittelabschnitt 12 herum und besteht aus einer Vielzahl von Einzelsegmenten, die hier als Finger 16 mit konstanter Breite ausgeführt sind. Die Finger 16 können aus einer Ausgangsstellung, die in den Figuren 1 und 2 gezeigt ist und in der sie sich in derselben Ebene wie der Mittelabschnitt 12 befinden, um etwa 90° nach bezüglich Fig. 1 oben geklappt werden. Dies wird später näher erläutert. Zum Verstellen der Finger 16 kann ein beliebiger (nicht dargestellter) Mechanismus verwendet werden.

Im Abstand vom Mittelabschnitt 12 ist eine Zusammenlegeinheit 18 angeordnet, die aus einer Führung 20, einem Außenstempel 22 und einem Mittelstempel 24 besteht. Die Führung 20 ist relativ zum Mittelabschnitt 12 feststehend; außerdem ist sie konzentrisch zu diesem angeordnet. Der ringförmige Außenstempel 22 ist ausgehend von der in Fig. 1 gezeigten Ausgangsstellung, in der er sich im Abstand vom Mittelabschnitt 12 der Unterlage 10 befindet, zur Unterlage hin verstellbar. Hierfür kann ein beliebiges Vorschubsystem verwendet werden. Der Außendurchmesser des Außenstempels 22 entspricht etwa dem Außendurchmessers des Mittelabschnittes 12 der Unterlage 10. Innerhalb des ringförmigen Außenstempels 22 ist der Mittelstempel 24 angeordnet, der ebenfalls ausgehend von der gezeigten Ausgangsstellung in eine zur Unterlage 10 hin vorgeschobene Stellung verstellt werden kann. Auch hierfür ist ein geeigneter (nicht dargestellter) Vorschubmechanismus vorgesehen.

In einem ersten Schritt zum Zusammenlegen eines Gassacks 30 wird dieser flach auf der Unterlage 10 ausgebreitet. Unter der Annahme, daß der Gassack im ausgebreiteten Zustand kreisförmig ist, wird er mittig auf der Unterlage 10 angeordnet. Der Gassack weist in einem Mittelbereich 32 ein Emblem 36 auf, welches später Teil eines Gassackmoduls ist, in welchem der zusammengelegte Gassack 30 angeordnet wird. Der ringförmige Außenbereich 34 des Gassacks liegt auf den Fingern 16 der Unterlage 10. Aufgrund der Eigensteifigkeit des Gassacks ist es unschädlich, daß die Finger 16 einen mit zunehmendem Abstand von der Mitte der Unterlage 10 zunehmenden Abstand voneinander aufweisen; die Finger 16 sind so angeordnet, daß sie sich nur an ihrem radial innenliegenden Ende berühren.

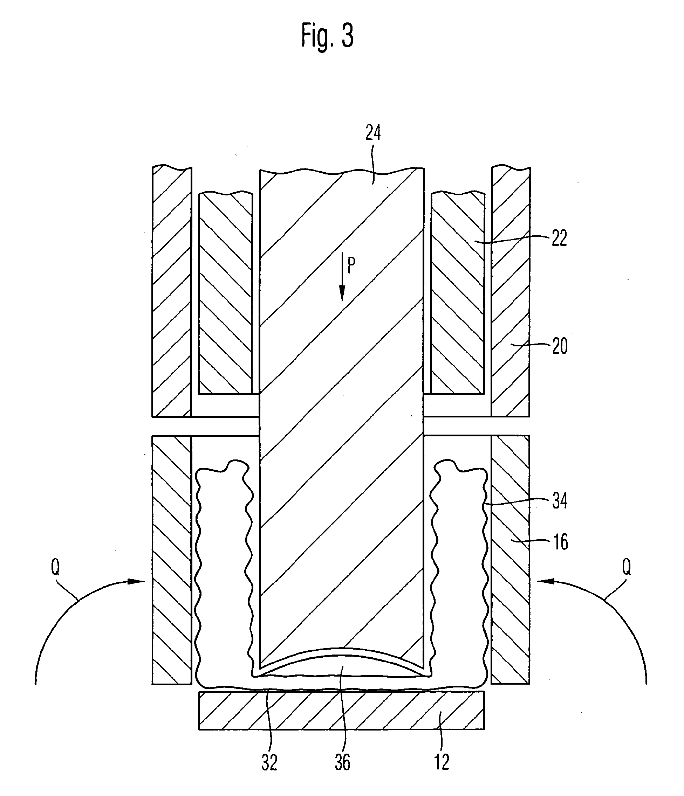

In einem zweiten Schritt zum Zusammenlegen des Gassacks wird zuerst der Mittelstempel 24 so nach vorne in der Richtung des Pfeils P von Fig. 3 verstellt, daß der Mittelbereich 32 des Gassacks 30 gegen den Mittelabschnitt 12 der Unterlage 10 festgeklemmt wird. Dabei greift der Mittelstempel 24 mit einer an seiner vorderen Stirnseite vorgesehenen Aussparung 26 auf dem Emblem 36 an. Der Mittelbereich 32 des Gassacks ist somit fest fixiert. Anschließend werden die Finger 16 um 90° nach oben geklappt (siehe Pfeile Q in Figur 3), so daß sie zusammen mit dem Mittelabschnitt 12 der Unterlage 10 einen nahezu geschlossenen Topf bilden. Beim Hochklappen der Finger 16 wird der ringförmige Außenbereich 34 des Gassacks 30 ebenfalls nach oben geklappt, so daß er sich im Raum zwischen dem Mittelstempel 24 und den Fingern 16 anordnet. Dieser Zustand ist in Fig. 3 gezeigt.

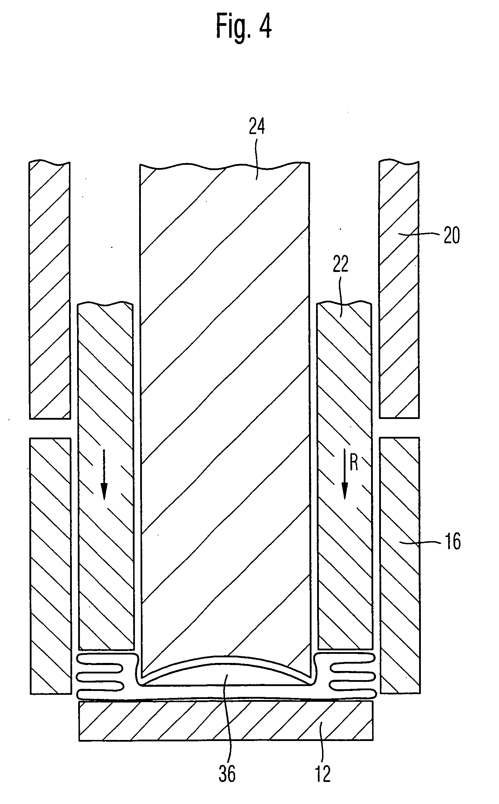

Als nächster Schritt wird der Außenstempel 22 aus seiner Ausgangsstellung nach unten hin zum Mittelabschnitt 12 der Unterlage in eine Zusammenlegstellung vorwärtsgeschoben (siehe Pfeil R in Figur 4). Dabei wird der Außenbereich 34 des Gassacks in einem ringförmigen Raum zwischen dem Mittelstempel 24 und den Fingern 16, die eine nahezu geschlossene, zylindrische Wand bilden, zur Unterlage 10 hin zusammengeschoben. Auf diese Weise wird der gewünschte, platzsparend zusammengelegte Zustand des Gassacks 30 erhalten.

Nach dem Zusammenlegen des Gassacks kann dieser in an sich bekannter Weise weiterverarbeitet werden, beispielsweise in ein Gassackmodul eingelegt werden oder in einer Hülle eingeschlossen werden.

Ein besonderer Vorteil des Verfahrens zum Zusammenlegen des Gassacks besteht darin, daß eine optimale Ausnutzung des zur Verfügung stehenden Packraumes erzielt wird, insbesondere weil erst beim letzten Schritt des Zusammenlegens, durchgeführt durch die Vorwärtsbewegung des Außenstempels 22, die gewünschte hohe Verdämmung des Gassack-Paketes erreicht wird. Die vorherigen Schritte können dagegen mit geringem Kraftaufwand durchgeführt werden. Ein besonderer Vorteil der Vorrichtung zum Zusammenlegen des Gassacks besteht darin, daß sie mechanisch einfach aufgebaut ist. Außerdem wird der Gassack mit geringem Aufwand aus seinem flach ausgebreiteten Zustand in den in Fig. 3 gezeigten Zustand überführt, in welchem er in einem Ringraum zusammengeschoben werden kann. Insbesondere sind keine komplizierten Greifer notwendig, um den Gassack in den Ringraum zu bekommen, und der Gassack muß auch nicht aufgeblasen werden, so daß er nachher beim Zusammenlegen wieder entlüftet werden müßte. Der zusammengelegte Gassack zeichnet sich dadurch aus, daß seine Wandung zuverlässig in einem Ringraum zusammengelegt wird und nicht in einem Mittelbereich zusammengeschoben werden kann. Dies ist insbesondere bei Doughnut-Gassäcken vorteilhaft.

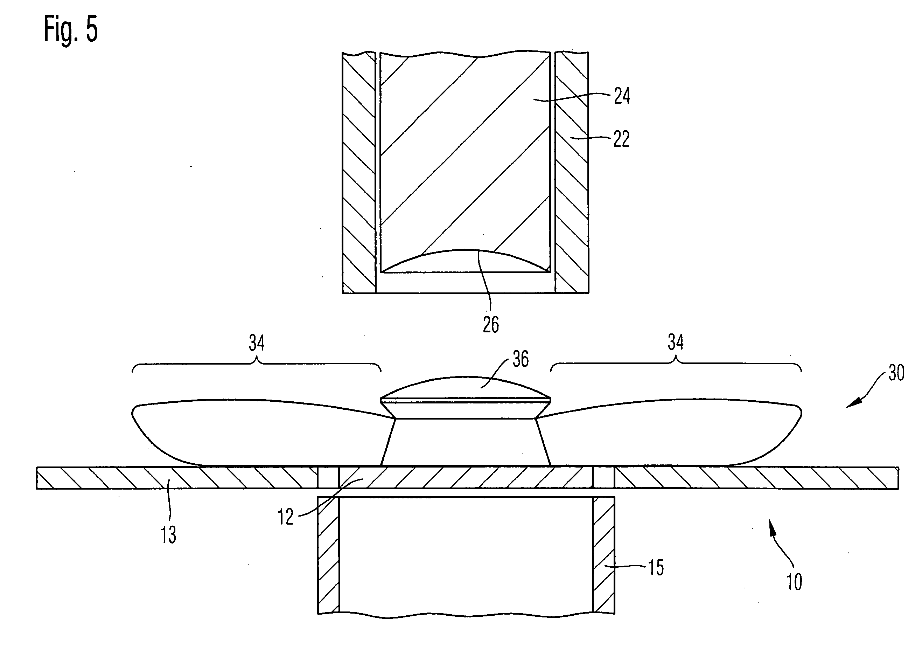

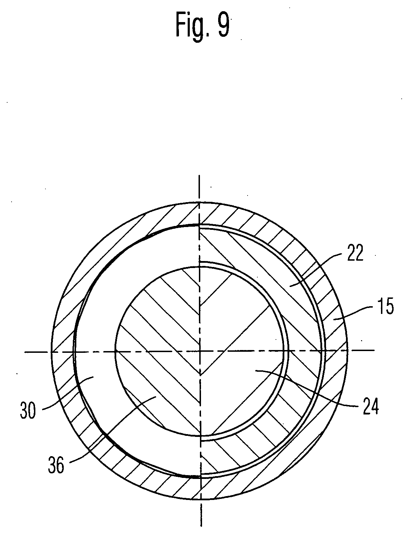

In den Figuren 5 bis 9 ist eine zweite Ausführungsform einer Vorrichtung zum Zusammenlegen eines Gassacks gezeigt. Für die von der ersten Ausführungsform bekannten Bauteile werden dieselben Bezugszeichen verwendet, und es wird insoweit auf die obigen Erläuterungen verwiesen.

Der wesentlichste Unterschied zwischen der ersten und der zweiten Ausführungsform besteht darin, daß bei der zweiten Ausführungsform die Unterlage 10 insgesamt feststehend ausgebildet ist; der feststehende Mittelabschnitt 12 ist von einem ringförmigen, ebenfalls feststehenden Außenabschnitt 13 umgeben. Zwischen dem Mittelabschnitt 12 und dem Außenabschnitt 13 befindet sich ein Spalt, unter dem ein Umlegeelement 15 in der Form einer Stülphülse angeordnet ist. Die Stülphülse ist translatorisch durch den Spalt hindurch nach oben verstellbar, also hin zum Außenstempel 22.

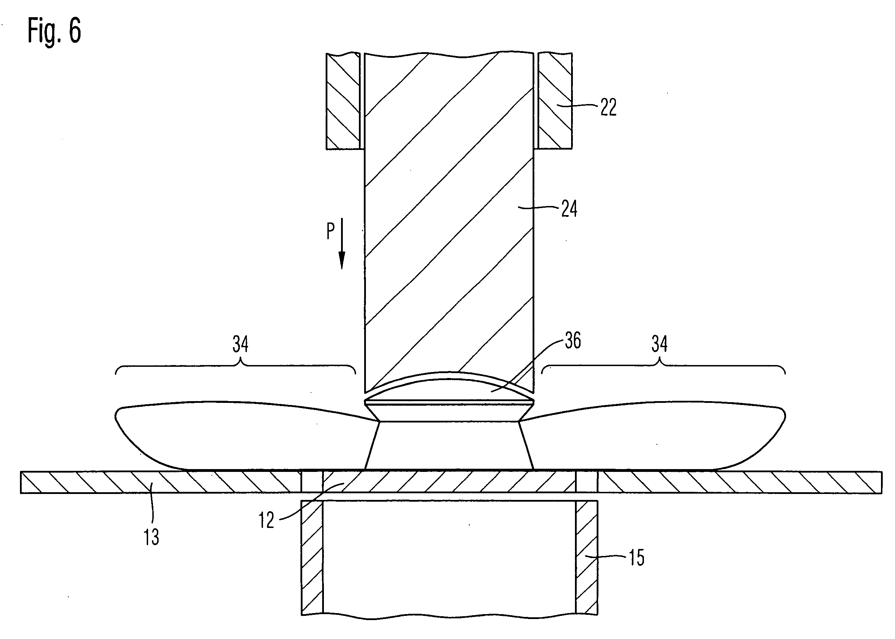

Auch bei der zweiten Ausführungsform wird der Gassack zuerst flach auf der Unterlage 10 ausgebreitet. Anschließend kann der Gassack geringfügig mit Luft gefüllt werden, so daß sich die Seitenteile 34 leicht auffwölben (siehe Figur 5). Dies erleichtert die weitere Verarbeitung. Dann wird der Mittelstempel 24 in der Richtung des Pfeils P nach unten verstellt (siehe Figur 6), so daß er mit seiner Aussparung 26 am Emblem 36 angreift und dadurch den Gassack an der Unterlage 10 fixiert.

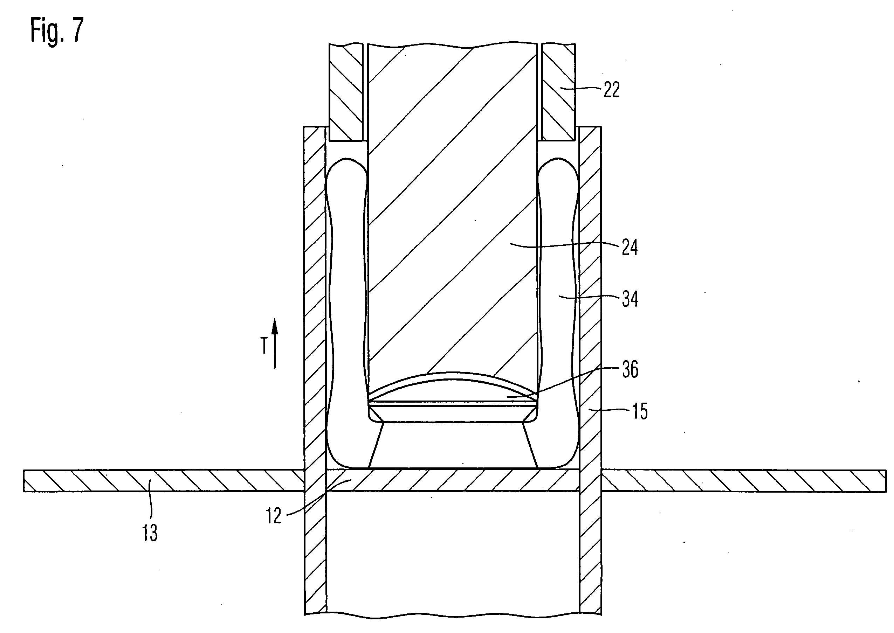

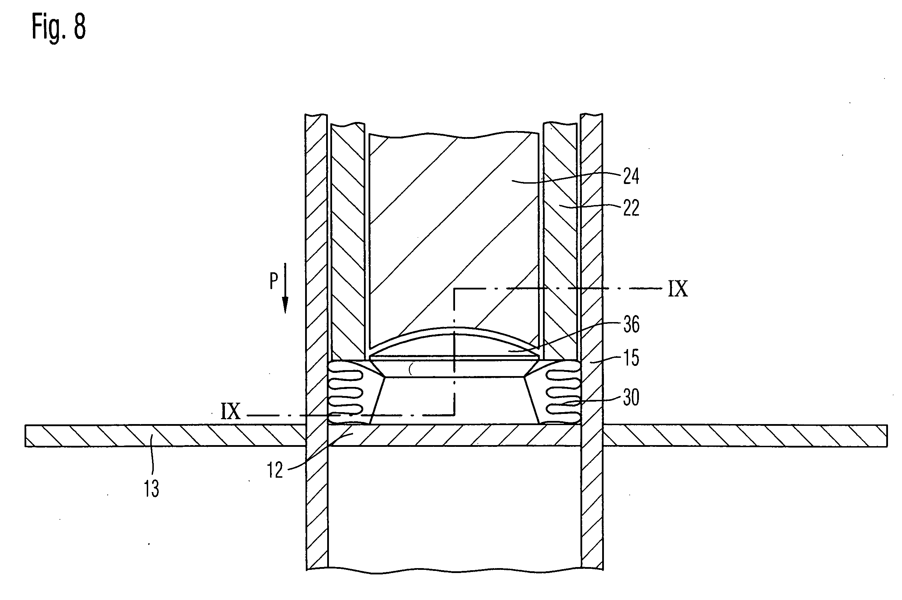

Anschließend wird die Stülphülse 15 in der Richtung des Pfeils T nach oben verstellt (siehe Figur 7), so daß der Gassack nach oben gezogen wird und in eine schürzenförmige Gestalt um den Mittelstempel 24 herum gebracht wird. Die Stülphülse 15 wird so weit verstellt, bis sie mit dem Außenstempel 22 überlappt. Abschließend kann der Außenstempel 22 wieder in der Richtung des Pfeils P hin zur Unterlage 10 verstellt werden (siehe Figur 8), so daß der Gassack 30 im Ringraum zwischen dem Innenstempel 24 und der Stülphülse 15 zusammengeschoben wird. Dabei entweicht die im Gassack enthaltene Luft aus der Einblasöffnung.

Die zweite Ausführungsform zeichnet sich durch einen geringen konstruktiven Aufwand aus; alle bewegten Bauteile lassen sich in einfacher Weise translatorisch verstellen, beispielsweise durch Hydraulikzylinder.

## Patentansprüche

1. Verfahren zum Zusammenlegen eines Gassacks (30) mittels der folgenden Schritte:
- der Gassack (30) wird auf einer Unterlage (10) flach ausgebreitet,
- ein ringförmiger Außenbereich (34) des Gassacks (30), der einen Mittelbereich (32) umgibt, wird um etwa 90° umgelegt, so daß der Außenbereich den Mittelbereich schürzenförmig umgibt;
- der Außenbereich (34) wird zur Unterlage (10) hin zusammengeschoben.

2. Verfahren nach Anspruch 1, **dadurch gekennzeichnet, daß** der Außenbereich (34) eingezogen bzw. eingestülpt wird.

3. Verfahren nach Anspruch 1, **dadurch gekennzeichnet, daß** der Außenbereich (34) umgeklappt wird.

4. Verfahren nach einem der vorhergehenden Ansprüche, **dadurch gekennzeichnet, daß** der Mittelbereich (32) des Gassacks (30) fixiert wird, bevor der Außenbereich (34) umgelegt wird.

5. Vorrichtung zum Zusammenlegen eines Gassacks, insbesondere mittels eines Verfahrens nach einem der vorhergehenden Ansprüche, **dadurch gekennzeichnet, daß** sie eine Unterlage (10) aufweist, die einen feststehenden Mittelabschnitt (12) und ein bewegbares Umlegeelement (14; 15) aufweist, sowie einen ringförmigen Außenstempel (22), dessen Außendurchmesser etwa dem Außendurchmesser des Mittelabschnitts (12) entspricht und der aus einer Ausgangsstellung in eine gegen die Unterlage (10) gedrückte Zusammenlegstellung verstellt werden kann.

6. Vorrichtung nach Anspruch 5, **dadurch gekennzeichnet, daß** das Umlegeelement (14) einen Außenabschnitt der Unterlage bildet und aus einer Vielzahl von klappbaren Einzelsegmenten (14) besteht.

7. Vorrichtung nach Anspruch 6, **dadurch gekennzeichnet, daß** die klappbaren Einzelsegmente (14), wenn sie aus einer Ausgangsstellung, in der sie sich in derselben Ebene befinden wie der Mittelabschnitt (12), in eine abgeklappte Stellung gebracht sind, zusammen mit dem Mittelabschnitt (12) einen Topf bilden.

8. Vorrichtung nach Anspruch 7, **dadurch gekennzeichnet, daß** die klappbaren Einzelsegmente Finger (16) mit konstanter Breite sind.

9. Vorrichtung nach Anspruch 5, **dadurch gekennzeichnet, daß** das Umlegeelement aus einer translatorisch verschiebbaren Stülphülse (15) besteht.

10. Vorrichtung nach einem der Ansprüche 5 bis 9, **dadurch gekennzeichnet, daß** ein Mittelstempel (24) vorgesehen ist, der innerhalb des Außenstempels (22) angeordnet ist und aus einer Ausgangsstellung in eine gegen die Unterlage (10) gedrückte Zusammenlegstellung verstellt werden kann.

11. Zusammengelegter Gassack, zusammengelegt insbesondere nach einem Verfahren gemäß den Ansprüchen 1 bis 3, **dadurch gekennzeichnet, daß** er einen flach ausgebreiteten Mittelbereich (32) und einen diesen umgebenden Ringbereich (34) aufweist, in welchem die Wandung des Gassacks chaotisch zusammengeschoben ist.

12. Gassack nach Anspruch 11, **dadurch gekennzeichnet, daß** der Gassack mit einem Emblem (36) versehen ist, das am ungefalteten Mittelbereich angebracht ist.
